# FASCICULE DE BREVET EUROPEEN

(11) **EP 0 645 275 B1**
(45) Date de publication et mention de la délivrance du brevet: **25.11.1998**
(21) Numéro de dépôt: 94450006.5
(22) Date de dépôt: 19.09.1994
(51) Int. Cl.: B60K 28/14, H01H 35/14

(54) **Dispositif coupe-circuit de sécurité, notamment pour véhicules**
Sicherheits-Abschaltgerät, insbesondere für Fahrzeuge
Safety cutoff device, particularly for vehicles

(30) Priorité: 20.09.1993 US 122938
(43) Date de publication de la demande: 29.03.1995
(73) Titulaire: Lucas, Daniel, F-33470 Le Teich (FR)
(72) Inventeur: Lucas, Daniel, F-33470 Le Teich (FR)
(74) Mandataire: Thébault, Jean-Louis

(56) Documents cités:
- EP-A- 0 013 779
- EP-A- 0 027 747
- EP-A- 0 398 307
- DE-A- 1 811 348
- DE-A- 2 344 425
- FR-A- 2 669 866

## Description

La présente invention concerne les véhicules et plus particulièrement les coupe-circuit de sécurité pour ces véhicules.

Depuis le développement des véhicules à moteur, il y a eu un réel intérêt pour que dans le cas d'un accident, les étincelles éventuellement générées par le système électrique et ses équipements connexes n'enflamment pas le carburant renversé ou d'autres matériaux inflammables.

Le feu qui fait suite à un accident est à craindre plus particulièrement, puisqu'il peut faire succomber les occupants du véhicule et peut gêner ou interdire l'intervention des secours.

Ceci est vrai non seulement pour les véhicules terrestres mais aussi pour les bateaux ou les avions, par exemple.

Dans le but de réduire le risque de feu initié par des défaillances du système électrique à la suite d'un accident, divers dispositifs ont été développés pour couper ou déconnecter une des bornes de la batterie afin d'interrompre l'alimentation électrique du système électrique de ce véhicule.

Cependant, dans chacun de ces cas, le moteur du véhicule peut continuer à produire de l'électricité au moyen de l'alternateur, jusqu'à ce que le régulateur de tension ou le pont de diodes redresseur associé soit détruit par un courant excessif, ce qui peut prendre plusieurs minutes.

De plus, quand le circuit de la batterie est coupé au moyen de l'un des dispositifs de l'art antérieur, le système électrique complet du véhicule est coupé, ce qui inclue les verrouillages centralisés des portes et les vitres électriques, empêchant l'intervention des secours de l'extérieur et rendant plus difficile l'évacuation des occupants.

Aussi, tout équipement de détresse instantané qui peut empêcher de situer un accident ou qui peut même interdire à des secours potentiels de se rendre compte qu'un accident a eu lieu sur la route dans le cas d'un véhicule terrestre ou dans une zone isolée pour un avion ou un bateau, est contraire aux règles de sécurité et dans ce but de tels équipement restent non homologués.

Les contraintes pour la mise en oeuvre d'un tel dispositif sont complexes car il faut que l'appareil puisse réagir en cas d'accident donc en cas de choc mais de façon non intempestive pour interdire par exemple l'ouverture brusque et simultanée de toutes les vitres lorsque le véhicule roule à vive allure ou pour couper l'alimentation électrique du véhicule lors d'un dépassement ou encore pour couper toute alimentation électrique de l'éclairage à un moment délicat comme la prise d'un virage.

Par ailleurs, il faut que l'appareil soit sensible à tous les types de choc quelle que soit l'orientation de la résultante du choc : avant, arrière, latérale.

Il faut également interdire l'accès à ce type d'appareil à tout intervenant non agréé afin d'éviter tout bridage ou tout dérèglement de l'appareil.

On remarque également d'une part que la fréquence d'utilisation est faible puisqu'il s'agit d'un usage unique et d'autre part que la fiabilité doit être totale puisqu'il s'agit d'un organe de sécurité.

Une application aux camions qui transportent des matières inflammables est bien entendu une application plus limitée en nombre mais très importante si l'on considère le risque.

On connaît ainsi des documents de l'art antérieur qui proposent des appareils qui sont cités et décrits ci-après :

Le brevet américain US-A-3 798 399 décrit un moyen anti-incendie pour prévenir les feux lors d'une collision d'un véhicule équipé d'un moteur à explosion interne, ce moyen comprenant une bille maintenue entre deux pistons verticaux, coaxiaux avec des ressorts pressant cette bille.

Quand la bille est sortie de son logement, le circuit entre la batterie et le système d'allumage du moteur est ouvert.

Dans la réalité, le pont en laiton et les pointes dans ce brevet manquent de fiabilité et présentent des risques de coupures électriques dues à l'oxydation entre le pont et les contacts, ceci en fonctionnement normal, c'est donc une source de panne.

Egalement, cet appareil est uniquement un moyen de déconnexion d'un circuit d'allumage et ne comprend aucune autre caractéristique.

Le brevet américain US-A-5 038 006 qui montre un coupe-circuit selon la préambule de la 1. révendication décrit un interrupteur électrique du type pendule qui coupe le contact avec les bornes de la batterie sous un choc intense tel qu'une collision.

Il est également prévu des moyens pour mettre en service des feux de détresse alimentés par la batterie.

Ceci présume cependant du fait que la batterie du véhicule n'ait pas été détruite et de plus le contact s'établit avec un délai relativement long puisqu'il faut que le pendule se soit écarté d'une amplitude suffisante.

En outre, dans une collision, généralement au moins un des jeux de feux de détresse a été détruit et rendu inutilisable.

Aussi, le courant allant aux feux de détresse intégrés au véhicule, quand les lampes ont été endommagées, peut causer des court-circuits et des arcs électriques qui, à leur tour, peuvent facilement mettre le feu.

On peut en outre remarquer que le pendule est constamment en mouvement, ce qui est d'une grande imprécision pour le déclenchement. Si le véhicule est déjà dans une pente au moment du choc, la sensibilité du dispositif est augmentée artificiellement et inutilement. Un tel dispositif est donc inadapté aux applications envisagées.

Le brevet américain US-A- 3743849 divulgue un circuit de coupure de puissance sous impact, applicable aux véhicules, qui coupe aussi automatiquement l'alimentation en carburant du véhicule.

Cette coupure d'alimentation n'est, bien sûr, pas une nécessité pour les véhicules à carburateur car, de toutes les façons, ce carburateur contient une certaine quantité de carburant qui a toutes les chances de s'écouler.

Dans le cas d'un moteur à injection, cette coupure d'alimentation du circuit n'est pas non plus une nécessité, par contre l'arrêt de la pompe du circuit d'injection est une nécessité, autrement elle va continuer à débiter le contenu des durites.

Aussi la présente invention vise à pallier les insuffisances des dispositifs de l'art antérieur et propose un coupe-circuit du type à inertie, en combinaison avec de nombreuses caractéristiques ayant trait à la sécurité, de façon à répondre globalement, avec un moyen unique à l'ensemble des problèmes soulevés.

Ce coupe-circuit ou interrupteur neutralise un des pôles de la batterie avec simultanément une neutralisation de l'alternateur pour prévenir les mêmes risques éventuellement provoqués par le courant généré par l'alternateur et débité dans le circuit du véhicule.

Dans le centième de seconde après l'impact, le moyen de la présente invention ouvre les serrures des portes du véhicule, met en service un équipement d'urgence auxiliaire, et interrompt l'admission de carburant avec coupure simultanée de la pompe d'injection pour les moteurs qui en sont équipés.

Au même moment, des unités à source de courant autonome, émettant des flashes sont mises en service à l'intérieur avant et arrière de l'habitacle, pour attirer l'attention sur le fait qu'il s'est produit un accident et pour permettre sa localisation.

Il n'y aucun danger d'amorçage de feu par cette source car la source de puissance est à très faible voltage.

Le fait que les différentes actions de sécurité soient déclenchées dans le 1/100 ème de seconde confirme que l'ensemble de ces actions peut être effectué avant une destruction de la batterie lors de l'impact du véhicule pendant l'accident.

A cet effet, la présente invention a pour objet un coupe-circuit de sécurité, notamment pour un véhicule équipé d'un moteur thermique utilisant un carburant inflammable et équipé d'un circuit électrique avec un moyen de production d'électricité, un moyen de stockage de l'électricité produite, des organes fonctionnels rattachés directement au moteur ainsi que des organes complémentaires de sécurité ou de confort alimentés en énergie électrique à partir du moyen de stockage ce dispositif comprenant un coupe-circuit prévu pour être interposé sur le circuit électrique immédiatement en aval du moyen de stockage de l'électricité, comprenant une bille en matériau conducteur de l'électricité disposée entre un premier et un second éléments, support de bille, également en matériau conducteur, pressés l'un vers l'autre par des éléments élastiques de rappel de façon à faire contact, ladite bille étant susceptible de s'échapper des éléments support de bille sous une décélération importante résultant d'un choc de façon à couper l'alimentation des organes fonctionnels comprend un circuit électrique principal de sécurité prévu pour être relié aux organes complémentaires de sécurité ou de confort, avec au moins un contacteur interposé entre ce circuit électrique de sécurité et au moins le premier élément support de bille qui est prévu pour être relié au moyen de stockage de l'électricité produite, ce contacteur étant déclenché par les mouvements, au moins, de ce premier élément support de bille.

Selon une autre caractéristique de l'invention, le coupe-circuit comprend un circuit électrique supplémentaire de sécurité, monté en parallèle avec le circuit électrique principal de sécurité, ce circuit électrique supplémentaire de sécurité étant relié d'une part au contacteur du circuit électrique principal de sécurité, donc au premier élément, support de bille lorsque ce contacteur est fermé et d'autre part à des organes supplémentaires de sécurité.

Plus particulièrement ces organes supplémentaires de sécurité sont, suivant les équipements du véhicule et des options ajoutées, des enveloppes gonflables de sécurité, des systèmes de déblocage automatique des ceintures de sécurité, un système d'extinction ou une balise de sécurité.

Une autre caractéristique importante de l'invention prévoit la mise en place d'un système de signalisation visuelle de sécurité, comprenant une source autonome d'électricité basse tension, des feux de détresse ainsi qu'un contacteur, déclenché par les mouvements, au moins, du second élément support de bille. Ces feux de détresse sont disposés à l'intérieur de l'habitacle du véhicule, derrière les vitres avant et arrière de façon à les protéger.

Afin de raccourcir au plus court le temps de réponse, les premier et second éléments, support de bille, comprennent des moyens d'alimentation des circuits principal et supplémentaire de sécurité, déclenchés dès le premier déplacement de la bille, avant l'éjection complète de la bille hors des éléments support de bille dans l'espace intérieur du coupe-circuit.

Selon un mode de réalisation préférentiel, les premiers et seconds éléments ont des formes de champignons avec un corps et une tête, chacune de ces têtes étant munies d'un logement concave prévu pour recevoir la bille.

L'anti-retour de la bille est obtenu par un agencement principal des têtes des éléments support de bille qui comprennent chacune un anneau en matériau isolant, disposé à sa périphérie.

Une variante de réalisation apporte un perfectionnement sous la forme de contacts directionnels insérés dans les parties supérieure et inférieure du boîtier, pour assurer un déclenchement de certains des éléments de sécurité suivant l'orientation de la résultante du choc.

Selon une caractéristique de l'invention, afin de garantir l'inviolabilité du système, les parties supérieure et inférieure sont soudées l'une à l'autre afin que ce coupe-circuit soit à usage unique.

La présente invention est décrite en détail, selon un mode de réalisation particulier non limitatif, en regard des dessins annexés sur lesquels les figures suivantes représentent :
- figure 1, une vue en perspective d'un dispositif ouvert selon l'invention,
- figure 2, une vue en coupe transversale, du dispositif selon l'invention, en position d'attente,
- figure 3, une vue en coupe identique à celle de la figure 2 mais avec la bille en cours de déplacement après un choc, lors d'un déclenchement dans le centième de seconde qui suit,
- figure 4, une vue en coupe transversale, identique à celle des figures 2 et 3, mais en position d'ouverture, après déplacement complet de la bille,
- figure 5, une vue générale, schématique du dispositif selon l'invention, en position d'attente, ce qui correspond à la figure 2,
- figure 6, une vue identique à celle de la figure 5, mais en position d'ouverture, correspondant à la figure 3, et
- figure 7, une vue identique à celles des figures 5 et 6, mais en position finale, correspondant à la figure 4.

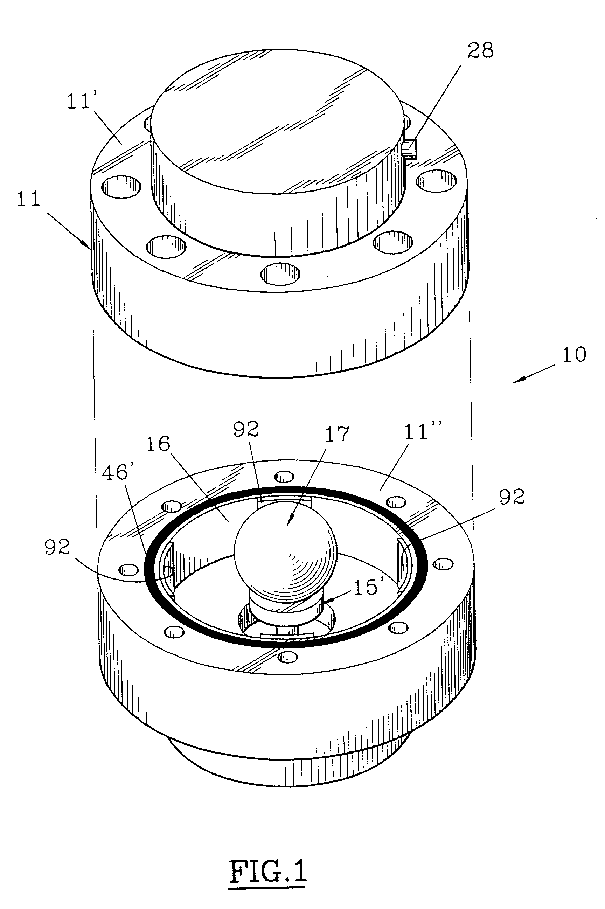

Sur les différentes figures 1 à 4, le coupe-circuit selon l'invention référencé 10, comprend un boîtier 11, composé de caoutchouc dur ou de matière plastique.

Le boîtier 11 comprend une partie supérieure 11' et une partie inférieure 11'', avec une forme ayant un profil de révolution dans l'exemple préférentiel représenté.

Ces deux parties 11' et 11'' sont liées l'une à l'autre par des moyens adaptés et notamment par des vis, doublées d'un soudage 10' périphérique, au droit du plan de joint.

Les références sont indiquées de façon générale en chiffres arabes simples pour les composants de la partie supérieure 11' et en chiffres arabes avec un "'" pour les composants identiques de la partie inférieure 11''.

Des ouvertures, centrées sur l'axe xx', donc axialement alignées, sont ménagées dans les parties supérieure et inférieure 11' et 11'' du boîtier.

Ces ouvertures constituent des trous de guidage supérieur 13 et inférieur 13'.

Un élément supérieur 14 support de bille, en forme de champignon, est monté coulissant par son pied, dans le trou de guidage supérieur 13 et un élément inférieur 14' support de bille, également en forme de champignon, est monté coulissant par son pied, dans le trou de guidage inférieur 13'.

Les extrémités des éléments 14 et 14' support de bille, internes au boîtier, se terminent par des têtes 15 et 15' de retenue de bille qui forment la tête du champignon.

Les surfaces 29 et 29', en vis à vis, des têtes des éléments support de bille, orientées vers l'intérieur 16 du boîtier 11, sont concaves de façon à pouvoir constituer un siège prévu pour recevoir une bille d'inertie 17, en métal.

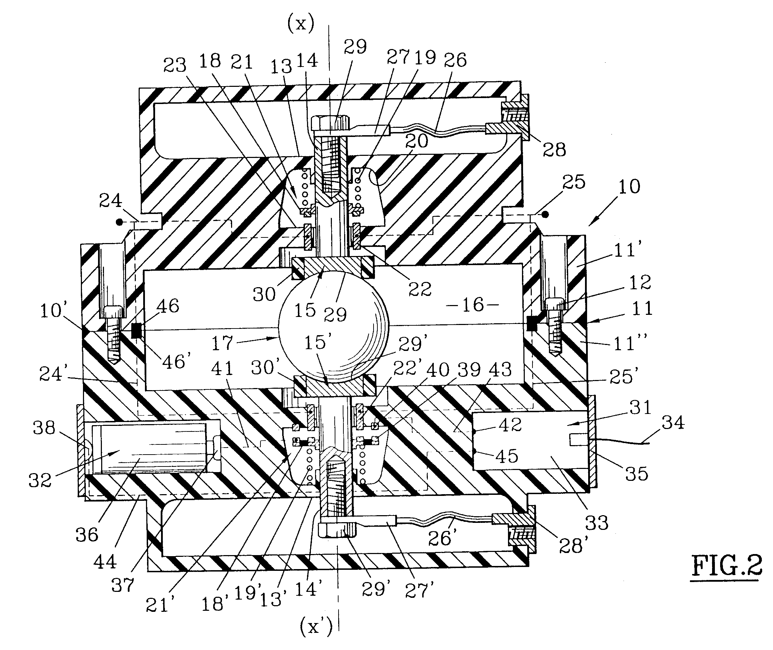

En ce qui concerne la figure 2, la partie supérieure 11' est décrite en détail ci-après.

Une plaque de contact, circulaire 18 est fixée sur le pied de l'élément 14 support de bille. Cette plaque 18 comprend une bague de contact annulaire, l'ensemble étant réalisé en matériau conducteur.

Un ressort hélicoïdal 19 est interposé entre cette plaque de contact 18 et la surface intérieure 20 haute de la chambre 21 de contact supérieur afin de pousser l'élément 14 support de bille supérieur vers la bille d'inertie 17, ainsi que représenté sur la figure 2.

Un anneau de contact 22 est disposé sur la surface intérieure basse de la chambre 21.

Cet anneau 22 est disposé en vis à vis de la bague de contact annulaire de la plaque 18, suivant l'axe longitudinal xx'.

Il est prévu deux sorties électriques par des fils conducteurs 24 et 25 raccordés à l'anneau de contact 22, débouchant sur des bornes extérieures à munir de connecteurs adaptés en fonction des applications, de tels connecteurs n'étant pas représentés pour la simplification du dessin mais restant à la portée de l'homme de l'art.

Une liaison électrique 26 relie une broche de connexion 28, filetée, solidaire du boîtier 11' avec une broche de connexion annulaire 27, à travers laquelle est montée une vis 29 dont le corps est vissé dans un taraudage ménagé dans le pied de l'élément 14 support, la tête de la vis venant en appui sur l'extrémité de ce même pied, après vissage complet.

La tête de retenue de bille 15 de l'élément 14 support de bille comprend, à sa périphérie, une bague annulaire 30, dont l'utilité sera indiquée ultérieurement dans la description du fonctionnement.

La partie inférieure 11'' est, pour l'essentiel, identique à la partie supérieure 11 et comme indiqué précédemment, les références de composants similaires portent les mêmes nombres avec un "'".

Cette partie inférieure 11'' comprend des moyens complémentaires de sécurité, intégrés, sous la forme d'un avertisseur lumineux 31, du type à flashes et une source d'énergie électrique 32, autonome.

L'avertisseur lumineux 31 comprend un réceptacle 33 intégré dans le boîtier et un conducteur 34, passant à travers une plaque 35 pour être relié à toute lampe adaptée, non représentée.

La source d'énergie électrique 32 est une pile batterie 36, avec des bornes 37 et 38.

De plus la plaque 18' comprend une bague de contact 39 isolée électriquement de ladite plaque, cette bague étant disposée en vis à vis d'un anneau de contact supplémentaire 40, porté comme l'anneau 22' par la surface supérieure de la chambre 21'.

Sur la figure 2, on remarque également que la bague de contact 39 de la plaque 18' est reliée à l'une des bornes, en l'occurrence la borne 37, de la pile batterie 36 par un conducteur 41 et que l'anneau de contact supplémentaire 40 est relié à l'une des bornes 42 de l'avertisseur lumineux 31, par un conducteur 43.

L'autre borne 38 de la pile 36 est reliée directement par un conducteur 44 à l'autre borne 45 de l'avertisseur lumineux 31.

On remarque en outre une particularité des conducteurs 24' et 25' qui sont reliés grâce à des bagues annulaires 46 et 46', directement aux conducteurs 24 et 25, ce qui permet de regrouper les sorties et d'améliorer la fiabilité, dans le cas où les conducteurs issus de la bague 22 sont dégradés.

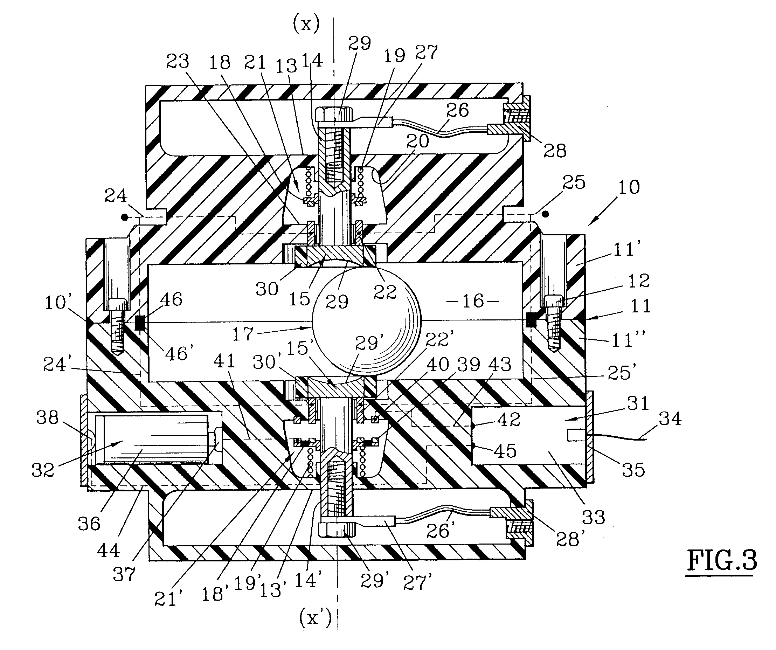

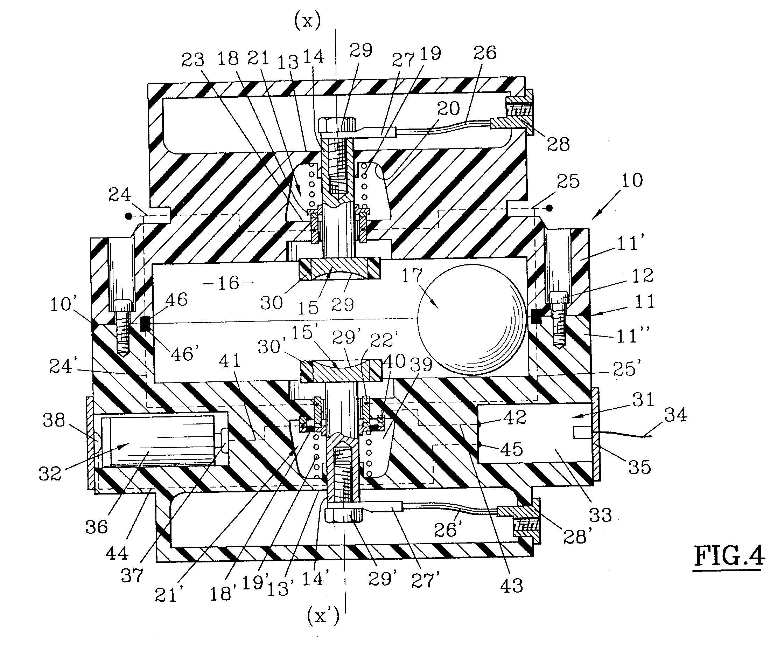

Les figures 3 et 4 portent les mêmes éléments avec les mêmes références, seules les positions de ces différents éléments étant modifiées au fur et à mesure du déplacement de la bille ainsi que cela sera décrit ultérieurement.

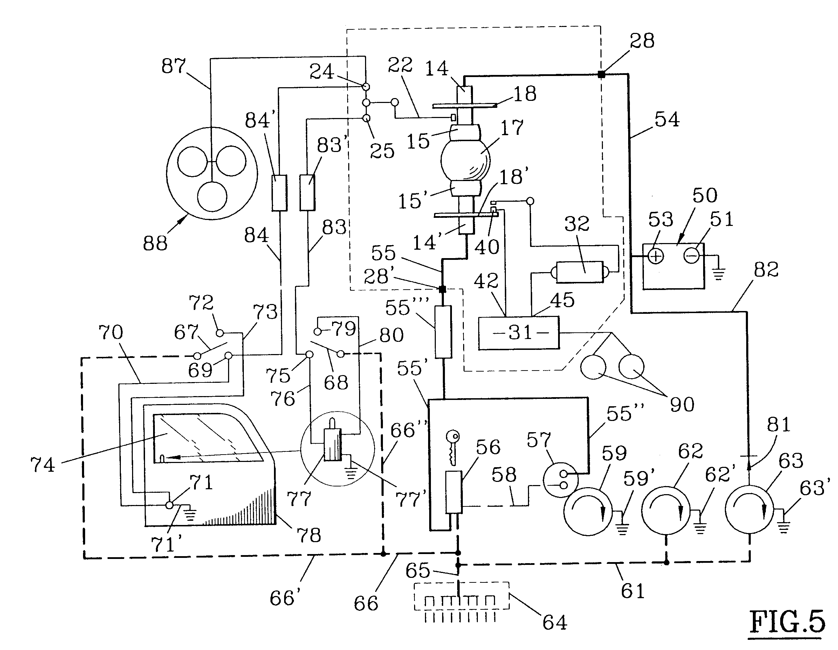

On se reporte maintenant plus particulièrement sur les figures 5, 6 et 7, afin de détailler le schéma électrique du véhicule sur lequel est interposé le coupe-circuit selon l'invention.

Le véhicule comprend une batterie 50 avec une borne négative 51 mise à la masse et une borne positive 53 sur laquelle est connectée l'une des extrémités d'un câble principal d'alimentation 54.

L'autre extrémité de ce câble est reliée au pied de l'élément 14 supérieur support de bille.

Le pied de l'élément 14' inférieur support de bille est relié par un câble 55 qui se sépare en deux câbles 55' et 55'', respectivement reliés au contacteur à clé 56 et au solénoïde 57 du lanceur du démarreur 59, le retour de commande du solénoïde par le contacteur à clé s'effectuant par le conducteur 58.

La mise à la terre de ce démarreur est indiquée en 59'.

Un fusible 55'''est également interposé sur le câble principal 55.

Cette partie du circuit qui vient d'être décrite allant de la batterie 50 au contacteur à clé 56 et au lanceur du démarreur est représentée en trait fort continu car elle est en permanence sous tension quand le contacteur à clé est sur "arrêt", puisque la bille est en place et assure la jonction électrique entre les deux conducteurs 54 et 55.

L'autre câble sous tension est le câble 82 de retour de l'alternateur 63 vers la batterie et plus particulièrement la portion comprise entre la diode "zener" 81 du redresseur de courant et la borne positive 53 de la batterie.

La mise à la masse de l'alternateur est référencée 63'

La pompe d'injection est référencée 62 et sa mise à la masse 62'.

Le conducteur d'alimentation en courant de cette pompe d'injection 62, commun avec celui de l'alternateur 63, est référencé 61, relié au contacteur à clé 56.

Le panneau 64 de fusibles du véhicule, de type connu pour la protection des différents équipements électriques, est relié électriquement au contacteur à clé par le conducteur 65.

Le conducteur 66 est connecté au conducteur 65 et il se divise en un premier conducteur 66' relié à l'interrupteur 67 du circuit du lève-vitre électrique et un second conducteur 66'' relié à l'interrupteur 68 du verrouillage centralisé des portières.

Lorsque l'interrupteur 67 est fermé sur le plot 69, le moteur 71 est alimenté par le conducteur 70 et la vitre 74 peut être ouverte. La mise à la terre étant référencée 71'.

Lorsque l'interrupteur 67 est fermé sur le plot 72, le moteur 71 est alimenté par le conducteur 73, en inversant les polarités d'alimentation du moteur et la vitre 74 peut être fermée.

Le verrouillage centralisé 77 des portières 78 est représenté dans un cercle à une plus grande échelle.

Lorsque l'interrupteur 68 est fermé sur le plot 75, le courant passe à travers le conducteur 76 et déverrouille la portière. La mise à la terre est référencée 77'.

Lorsque l'interrupteur 68 est fermé sur le plot 79, le courant passe par le conducteur 80 et verrouille la portière. Les câbles et conducteurs sont représentés en trait fort discontinu, car cette partie du circuit est sous tension dès que le contacteur à clé est sur position "marche", c'est à dire en position fermée.

De plus, des conducteurs spécifiques 83 et 84 relient les plots 75 et 69 des interrupteurs 68 et 67 aux sorties 24 et 25 du coupe-circuit selon l'invention, représenté sur les figures 2, 3 et 4.

Des fusibles 83' et 84' sont prévus pour protéger les appareillages alimentés par ces conducteurs 83 et 84.

De façon générale, on a prévu de multiplier les sorties telles que 24 et 25 et le conducteur 87 correspond à une sortie générale complémentaire, non représentée sur les figures 2,3 et 4 pour la clarté du dessin, susceptible d'alimenter des moyens complémentaires de sécurité regroupés sous la référence 88.

De tels moyens complémentaires 88 peuvent comprendre par exemple des ballons gonflables de sécurité dits "air bag" et/ou des systèmes d'ouverture automatique des ceintures de sécurité, des moyens extincteurs ou encore une balise de détresse et de localisation comme il en existe pour les transports de matière dangereuse ou pour les transports en commun.

Sur les figures 5,6 et 7, des lampes flashes 90 sont représentées schématiquement et elles seront de préférence disposées l'une derrière le pare-brise et l'autre derrière la vitre arrière, de façon à les protéger lorsqu'elles ne sont pas utilisées.

De plus, les chances de conserver au moins une des lampes en état après un accident sont augmentées, surtout depuis que les constructeurs de véhicules se sont attachés à renforcer l'habitacle pour le rendre quasi indéformable.

Le fonctionnement du coupe-circuit selon l'invention est maintenant décrit en regard des figures 1 à 7.

Le coupe-circuit 10 est monté sur le véhicule auquel il est solidarisé par des colliers de grande résistance et il est disposé dans un endroit protégé, plus particulièrement dans le compartiment moteur, en arrière de celui-ci, sur un véhicule de tourisme ou sur les longerons du châssis à proximité des batteries sur un véhicule utilitaire du type poids-lourd.

Les deux parties ont bien entendu été solidarisées l'une à l'autre à l'aide de vis et en complément par une soudure haute fréquence par exemple.

Le branchement étant effectué, le coupe-circuit 10 se trouve dans l'état représenté sur la figure 2 et le schéma électrique se présente ainsi que le montre la figure 5.

La bille est bloquée entre les deux éléments 14 et 14' de support de bille puisque les ressorts 19 et 19' ont tendance à plaquer ces éléments l'un vers l'autre. Pour donner un ordre de grandeur, sur un véhicule de tourisme, l'effort de serrage est de l'ordre d'une vingtaine de kilogrammes pour une bille d'un diamètre de 35 mm.

Les plaques 18 et 18' sont éloignées des contacts si bien que ceux-ci sont ouverts interdisant le passage du courant.

On constate que dans ce cas, la batterie reliée à la borne 28, débite à travers l'élément 14 supérieur support de bille, à travers la bille 17 qui est en métal donc conductrice et à travers l'élément 14' inférieur support de bille.

Les conducteurs sous tension sont, de façon générale, représentés en traits épais.

Le courant de la batterie passe à travers le fusible 55''' et alimente par le conducteur 55' le contacteur à clé 56 et le solénoïde du lanceur 57 du démarreur.

Parallèlement le conducteur 82 reliant la batterie à l'alternateur est bien sûr sous tension également mais la circulation du courant dans ce sens est interdite par la diode Zener.

Dès que l'utilisateur tourne la clé pour mettre le contact, il alimente l'ensemble du circuit représenté en trait discontinu épais.

Ainsi que cela est connu, l'utilisateur tourne un cran de plus pour lancer le démarreur mais cette phase n'intéresse pas particulièrement la présente demande de brevet.

On sait simplement qu'à ce moment, le démarreur tourne et lance le moteur, le contacteur à clé revenant dans sa position de contact seul dès que l'utilisateur relâche la clé.

Les lève-vitre et les gâches électriques du verrouillage centralisé du véhicule sont alimentés et peuvent être actionnés à la demande de l'utilisateur par manoeuvre des contacts 67 et 68.

En fonctionnement, le véhicule a donc les circuits en traits épais et en traits discontinus épais alimentés, tandis que l'alternateur 63 débite dans la batterie pour la recharger.

Les circuits de sécurité sont hors tension puisque les contacts ne sont pas fermés, si bien que la pile 36 ne débite pas, les moyens complémentaires de sécurité 88 sont à l'arrêt et les lève-vitre et les gâches des serrures électriques du verrouillage centralisé peuvent fonctionner librement dans un sens comme dans l'autre.

Lorsqu'un choc se produit, la bille subit une accélération très importante et suffisante pour l'éjecter malgré l'effort de retenue des éléments 14 et 14' support de bille.

La bille 17 soulève donc dans un premier temps les têtes 15 et 15' des éléments en forme de champignon à l'encontre des ressorts 19 et 19', ce qui les écarte.

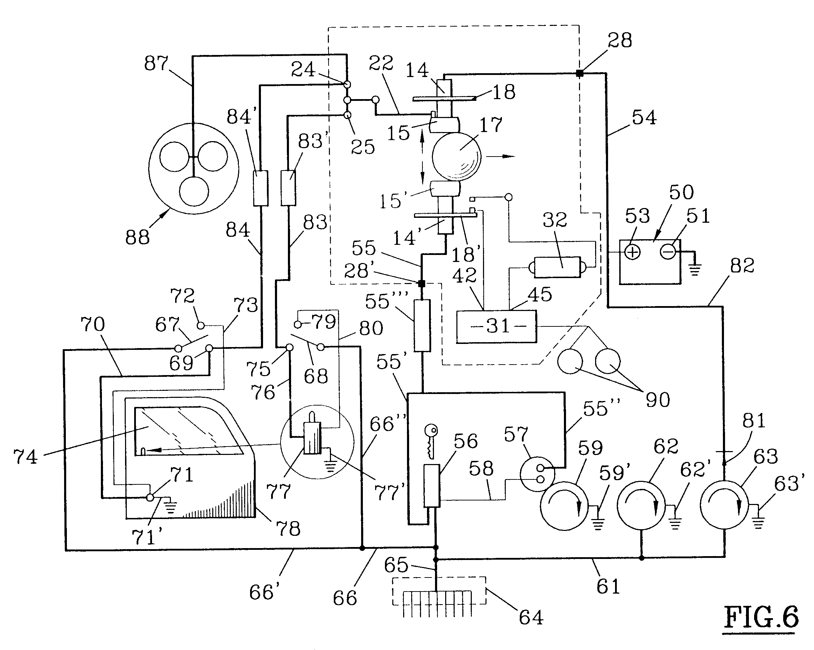

On se trouve alors dans la position représentée sur les figures 3 et 6.

Les têtes de retenue 15 et 15' viennent au contact des bagues conductrices 22 et 22'.

Le courant continue à circuler puisque la bille 17 fait toujours contact et les sorties 24 et 25 sont à leur tour alimentées.

La fiabilité est totale puisque, si les conducteurs 24 et 25 sont détériorés au droit de l'élément 14, les conducteurs 24' et 25' peuvent y pallier, les contacts 46' et 46 permettent le passage de la partie 11'' vers la partie 11'.

Ceci provoque l'alimentation instantanée des gâches électriques du verrouillage centralisé des portières, en provoquant le déverrouillage ainsi que l'ouverture des vitres tant qu'il y a du courant électrique débité par la batterie.

Les moyens complémentaires de sécurité 88 sont également alimentés si bien que les ballons gonflables de sécurité dits "air bag" et/ou les systèmes d'ouverture automatique des ceintures de sécurité ainsi que les extincteurs et balises éventuels se sont également déclenchés.

Le temps de réponse est de l'ordre du 1/100 ème de seconde, si bien que toutes ces actions et tous ces organes de sécurité sont les premiers déclenchés avec un temps de réponse suffisamment court pour assurer une action quelles que soient les circonstances.

On remarque également que la batterie est susceptible de fournir du courant électrique même si elle est détruite ultérieurement puisque la décélération est suffisamment importante dès le début du choc pour que le déclenchement s'effectue pendant la déformation des pièces mécaniques mais avant que ces pièces mécaniques ne soient totalement déformées et que la batterie, généralement, en retrait soit éventuellement détruite.

La bille est projetée dans l'espace 16 du boîtier 11 et les bagues annulaires 30 et 30' interdisent le retour de la bille entre les têtes de retenue 15 et 15', en plus du fait que ces têtes se sont rapprochées puisque les éléments 14 et 14' support de bille n'étant plus soumis au blocage de la bille subissent les efforts des ressorts 19 et 19'.

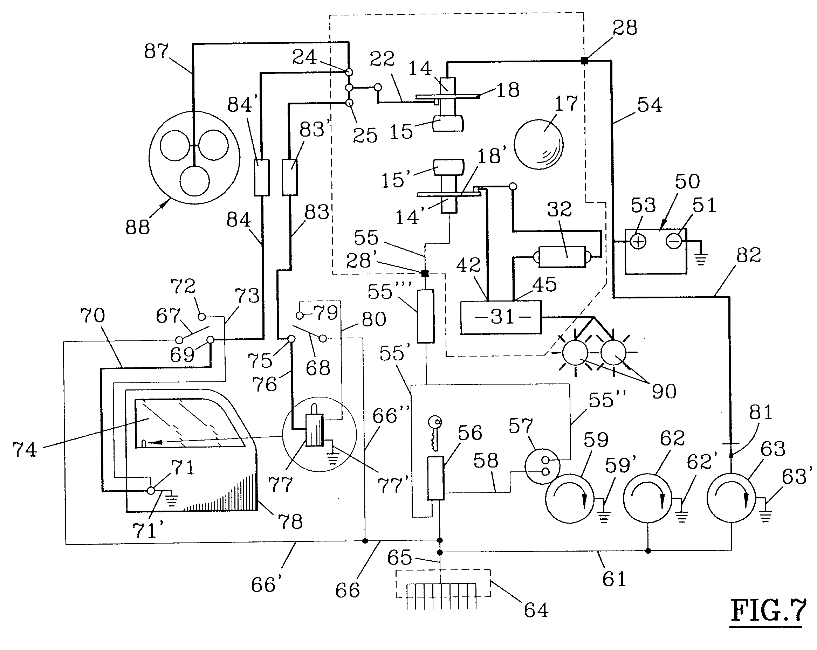

C'est la situation du coupe-circuit selon l'invention représentée sur les figures 4 et 7.

Les conducteurs alimentés sont à nouveau représentés en trait plein épais.

La bille 17 étant retirée, le courant ne circule plus dans l'élément 14' support de bille, si bien que l'ensemble du circuit fonctionnel du véhicule, c'est à dire le contacteur à clé 56, le démarreur 59, la pompe d'injection 62, l'alternateur 63, la boîte à fusibles 64, ainsi que tous les organes rattachés ne fonctionnent plus et surtout ne sont plus alimentés ce qui supprime tout risque de court-circuit.

Les organes de sécurité sont toujours alimentés pour autant que la batterie soit toujours en état, si bien que les vitres non brisées avec leur mécanisme en état peuvent être ouvertes complètement.

Le circuit des lampes flashes se met en service puisque le disque 18' ferme le circuit comprenant la pile 36, l'avertisseur lumineux 31 et les lampes 90.

On constate que dès que le véhicule est immobilisé après le choc, les lampes sont allumées ce qui permet de situer rapidement le lieu de l'accident.

Sur la figure 1, on a représenté un perfectionnement qui n'apparaît pas sur les autres figures afin de ne pas les surcharger inutilement.

En effet, la face intérieure du boîtier comprend des contacts sélectifs 92 dédiés, disposés sur la périphérie intérieure du volume intérieur 16, chaque contact étant relié à un organe de sécurité, tel qu'un ballon gonflable de sécurité.

Ainsi chaque contact est relié à l'organe de sécurité qui doit être déclenché en fonction du lieu de l'impact sur le véhicule donc en fonction de la direction dans laquelle la bille est projetée sous l'effet de cet impact.

Par exemple, dans le cas d'un choc frontal, seuls les ballons gonflables avant sont déclenchés et les ballons latéraux ne le sont pas afin de laisser libre la sortie des occupants.

Il est bien sûr nécessaire de respecter une orientation angulaire donnée, bien définie lors du montage du boîtier 11.

Une autre application du dispositif selon l'invention concerne les transports spéciaux, comme les transports de fonds, dont les véhicules doivent être protégés contre les agressions d'une part qui peuvent résulter d'un accident volontaire et contre les risques d'incendie d'autre part afin de préserver certes la vie des occupants mais également les valeurs transportées.

Dans le cas de certains véhicules comme les cars routiers ou les poids-lourds, il est prévu un circuit de freinage de sécurité qui est déclenché par une commande indépendante et qui est actionné par un circuit autonome. Un tel circuit peut être également déclenché de façon automatique par le dispositif selon l'invention.

## Revendications

1. Dispositif coupe-circuit de sécurité notamment pour un véhicule équipé d'un moteur thermique utilisant un carburant inflammable, ce véhicule étant équipé d'un circuit électrique comprenant un moyen de production d'électricité (63), un moyen de stockage (50) de l'électricité produite, des organes fonctionnels (56,59,62,64) rattachés directement au moteur ainsi que des organes complémentaires de sécurité (77) ou de confort (71) alimentés en énergie électrique à partir du moyen de stockage, ce dispositif comprenant un coupe-circuit (10) prévu pour être interposé sur le circuit électrique immédiatement en aval du moyen de stockage de l'électricité, comprenant une bille (17) disposée entre un premier et un second éléments (14,14'), support de bille, pressés l'un vers l'autre par des éléments élastiques de rappel (19,19') de façon à faire contact, ladite bille étant susceptible de s'échapper des éléments support de bille sous une décélération importante résultant d'un choc de façon à couper l'alimentation des organes fonctionnels, le dispositif comprenant un circuit électrique principal de sécurité (83,84) prévu pour être relié aux organes complémentaires de sécurité (77) ou de confort (71), avec au moins un contacteur (18,22 ; 18',22') ce contacteur étant déclenché par les mouvements, au moins, de ce premier élément support de bille, caractérisé en ce que la bille (17) et les supports de bille sont en matériau conducteur de l'électricité de façon à faire contact, et en ce que le contacteur (18,22 ; 18',22') est interposé entre ce circuit électrique de sécurité et au moins le premier élément (14) support de bille qui est prévu pour être relié au moyen de stockage (50) de l'électricité produite.

2. Dispositif coupe-circuit de sécurité selon la revendication 1, caractérisé en ce qu'il comprend un circuit électrique supplémentaire de sécurité (87), monté en parallèle avec le circuit électrique principal de sécurité (83,84), ce circuit électrique supplémentaire de sécurité étant relié d'une part au contacteur (22,22') du circuit électrique principal de sécurité, donc au premier élément (14), support de bille lorsque ce contacteur est fermé et d'autre part est susceptible d'être relié à des organes supplémentaires de sécurité (88).

3. Dispositif coupe-circuit de sécurité selon la revendication 2, caractérisé en ce que les organes supplémentaires de sécurité (88) comprennent notamment des enveloppes gonflables de sécurité, des systèmes de déblocage automatique des ceintures de sécurité, un système d'extinction ou une balise de sécurité.

4. Dispositif coupe-circuit de sécurité selon la revendication 1,2 ou 3, caractérisé en ce qu'il comprend un système de signalisation visuelle de sécurité (31), comprenant une source autonome d'électricité basse tension (32), des feux de détresse (90) ainsi qu'un contacteur (40), déclenché par les mouvements, au moins, du second élément (14') support de bille.

5. Dispositif coupe-circuit de sécurité selon la revendication 4, caractérisé en ce que les feux de détresse (90) sont susceptible d'être disposés à l'intérieur de l'habitacle du véhicule, derrière les vitres avant et arrière de façon à les protéger.

6. Dispositif coupe-circuit de sécurité selon l'une quelconque revendications précédentes, caractérisé en ce que les premier et second éléments (14,14'), support de bille comprennent des moyens d'alimentation (15,22) des circuits principal et supplémentaire de sécurité, déclenchés dès le premier déplacement de la bille (17), avant l'éjection complète de la bille (17) hors des éléments (14, 14') support de bille dans l'espace intérieur (16) du coupe-circuit (10).

7. Dispositif coupe-circuit de sécurité selon l'une quelconque des revendications précédentes, caractérisé en ce que les premiers et seconds éléments (14,14') ont des formes de champignons avec un corps et une tête (15,15'), chacune de ces têtes étant munies d'un logement concave (29,29') prévu pour recevoir la bille (17).

8. Dispositif coupe-circuit de sécurité selon la revendication 7, caractérisé en ce que les têtes (15,15') comprennent chacune un anneau (30,30') en matériau isolant, disposé à sa périphérie.

9. Dispositif coupe-circuit de sécurité selon l'une quelconque des revendications précédentes, caractérisé en ce que les parties supérieure (11') et inférieure (11'') du boîtier (11) comprennent des contacts (92) dédiés et directionnels pour assurer un déclenchement de certains des éléments de sécurité suivant l'orientation de la résultante du choc.

10. Dispositif coupe-circuit de sécurité selon l'une quelconque des revendications précédentes, caractérisé en ce que les parties supérieure (11') et inférieure (11'') sont soudées l'une à l'autre afin que ce coupe-circuit soit à usage unique.

## Claims

1. Safety circuit-breaker device, notably for a vehicle equipped with a thermal engine using a flammable fuel, this vehicle being equipped with an electrical circuit comprising electricity production means (63), means (50) for storing the electricity produced, functional components (56, 59, 62, 64) directly attached to the engine, as well as complementary safety (77) or comfort (71) components fed with electrical energy from the storage means, this device comprising a circuit breaker (10) designed to be interposed on the electrical circuit immediately downstream of the electricity storage means, comprising a ball (17) disposed between first and second elements (14, 14') supporting the ball, pressed towards each other by elastic return means (19, 19') so as to make contact, said ball being able to escape from the ball-support elements under significant deceleration resulting from an impact so as to cut off the power supply to the functional components, the device comprising a main safety electrical circuit (83, 84) designed to be connected to the complementary safety (77) or comfort (71) components, with at least one contactor (18, 22; 18', 22'), this contactor being triggered at least by the movements of said first ball-support element, characterised in that the ball (17) and the ball supports are made from electrically conductive material so as to make contact, and in that the contactor (18, 22; 18', 22') is interposed between this safety electrical circuit and at least the first ball-support element (14) designed to be connected to the means (50) for storing the electricity produced.

2. Safety circuit-breaker device according to Claim 1, characterised in that it comprises a supplementary safety electrical circuit (87), connected in parallel with the main safety electrical circuit (83, 84), this supplementary safety electrical circuit being connected on the one hand to the contactor (22, 22') of the main safety electrical circuit, and therefore to the first ball-support element (14) when this contactor is closed, and on the other hand able to be connected to supplementary safety devices (88).

3. Safety circuit-breaker device according to Claim 2, characterised in that the supplementary safety components (88) comprise notably inflatable safety bags, automatic safety-belt release systems, an extinguishing system or a safety beacon.

4. Safety circuit-breaker device according to Claim 1, 2 or 3, characterised in that it comprises a visual safety signalling system (31), comprising a self-contained low-voltage electricity source (32), hazard warning lights (90) and a contactor (40) triggered by the movements at least of the second ball-support element (14').

5. Safety circuit-breaker device according to Claim 4, characterised in that the hazard warning lights (90) are able to be disposed inside the vehicle passenger compartment, behind the front and rear windows so as to protect them.

6. Safety circuit-breaker device according to any one of the preceding claims, characterised in that the first and second ball-support elements (14, 14') comprise means (15, 22) for supplying the main and supplementary safety circuits, triggered as soon as the ball (17) first moves, before the complete ejection of the ball (17) out of the ball-support elements (14, 14') in the internal space (16) of the circuit breaker (10).

7. Safety circuit-breaker device according to any one of the preceding claims, characterised in that the first and second elements (14, 14') have a mushroom shape with a body and head (15, 15'), each of these heads being provided with a concave housing (29, 29') intended to receive the ball (17).

8. Safety circuit-breaker device according to Claim 7, characterised in that the heads (15, 15') each comprise an annulus (30, 30') made of insulating material, disposed at its periphery.

9. Safety circuit-breaker device according to any one of the preceding claims, characterised in that the upper (11') and lower (11'') parts of the casing (11) comprise dedicated directional contacts (92) for providing triggering of some of the safety elements depending on the orientation of the resultant of the impact.

10. Safety circuit-breaker device according to any one of the preceding claims, characterised in that the upper (11') and lower (11'') parts are welded to each other so that this circuit breaker is for use only once.

## Patentansprüche

1. Abschaltsicherungsvorrichtung, insbesondere für ein Fahrzeug, das mit einem einen entzündlichen Kraftstoff verwendenden Verbrennungsmotor ausgerüstet ist, wobei dieses Fahrzeug mit einer elektrischen Schaltung versehen ist, die ein Mittel (63) zum Erzeugen von Elektrizität, ein Mittel (50) zum Speichern der erzeugten Elektrizität, direkt am Motor befestigte Funktionselemente (56, 59, 62, 64) sowie zusätzliche Sicherheitselemente (77) oder Komfortelemente (71), die von den Speichermitteln mit elektrischer Energie gespeist werden, umfaßt, wobei diese Vorrichtung einen Abschalter (10) enthält, der dazu vorgesehen ist, zwischen die elektrische Schaltung direkt hinter den Elektrizitätsspeichermitteln eingefügt zu werden und eine Kugel (17) enthält, die zwischen einem ersten und einem zweiten Kugelträgerelement (14, 14') angeordnet ist, wobei die Kugelträgerelemente durch elastische Rückstellelemente (19, 19') in der Weise gegeneinander gepreßt werden, daß ein Kontakt hergestellt wird, wobei die Kugel bei einer aus einem Stoß resultierenden großen Verzögerung aus den Kugelträgerelementen entweichen kann, so daß die Speisung der Funktionselemente unterbrochen wird, wobei die Vorrichtung eine elektrische Hauptsicherheitsschaltung (83, 84) enthält, die dazu vorgesehen ist, mit den zusätzlichen Sicherheitselementen (77) oder Komfortelementen (71) verbunden zu werden, und wenigstens einen Einschalter (18, 22; 18', 22') enthält, der wenigstens durch die Bewegungen dieses ersten Kugelträgerelements ausgelöst wird, dadurch gekennzeichnet, daß die Kugel (17) und die Kugelträger aus Elektrizität leitendem Material bestehen, um einen Kontakt herzustellen, und daß der Einschalter (18, 22; 18', 22') zwischen diese elektrische Sicherheitsschaltung und wenigstens das erste Kugelträgerelement (14) geschaltet ist, das dazu vorgesehen ist, mit den Mitteln (50) zum Speichern der erzeugten Elektrizität verbunden zu werden.

2. Abschaltsicherungsvorrichtung nach Anspruch 1, dadurch gekennzeichnet, daß sie eine elektrische Zusatzsicherheitsschaltung (87) enthält, die zur elektrischen Hauptsicherheitsschaltung (83, 84) parallelgeschaltet ist und einerseits mit dem Einschalter (22, 22') der elektrischen Hauptsicherheitsschaltung und daher mit dem ersten Kugelträgerelement (14) verbunden ist, wenn dieser Einschalter geschlossen ist, und andererseits mit zusätzlichen Sicherheitselementen (88) verbunden werden kann.

3. Abschaltsicherungsvorrichtung nach Anspruch 2, dadurch gekennzeichnet, daß die zusätzlichen Sicherheitselemente (88) insbesondere Gaskissen, Systeme zur automatischen Entriegelung von Sicherheitsgurten, ein Löschsystem oder eine Sicherheitsbake enthalten.

4. Abschaltsicherungsvorrichtung nach Anspruch 1, 2 oder 3, dadurch gekennzeichnet, daß sie ein visuelles Sicherheitmeldesystem (31) enthält, das eine unabhängige Niederspannungs-Stromquelle (32), Notlichter (90) sowie einen Einschalter (40), der durch die Bewegungen wenigstens des zweiten Kugelträgerelements (14') ausgelöst wird, umfaßt.

5. Abschaltsicherungsvorrichtung nach Anspruch 4, dadurch gekennzeichnet, daß die Notlichter (90) im Fahrgastraum hinter der Frontscheibe und der Heckscheibe angeordnet werden können, um sie zu schützen.

6. Abschaltsicherungsvorrichtung nach irgendeinem der vorangehenden Ansprüche, dadurch gekennzeichnet, daß das erste und das zweite Kugelträgerelement (14, 14') Mittel (15, 22) zur Speisung der Haupt- und Zusatzsicherheitsschaltungen enthalten, die bei der ersten Verschiebung der Kugel (17) vor dem vollständigen Auswurf der Kugel (17) aus den Kugelträgerelementen (14, 14') im Innenraum (16) des Abschalters (10) ausgelöst werden.

7. Abschaltsicherungsvorrichtung nach irgendeinem der vorangehenden Ansprüche, dadurch gekennzeichnet, daß das erste und das zweite Element (14, 14') jeweils eine Pilzform mit einem Körper und einem Kopf (15, 15') besitzt, wobei jeder dieser Köpfe mit einem konkaven Aufnahmeraum (29, 29') versehen ist, der dazu vorgesehen ist, die Kugel (17) aufzunehmen.

8. Abschaltsicherungsvorrichtung nach Anspruch 7, dadurch gekennzeichnet, daß die Köpfe (15, 15') jeweils einen am Umfang angeordneten Ring (30, 30') aus Isoliermaterial enthalten.

9. Anschaltsicherungsvorrichtung nach irgendeinem der vorangehenden Ansprüche, dadurch gekennzeichnet, daß das obere Teil (11') und das untere Teil (11'') des Gehäuses (11) jeweils spezifische und gerichtete Kontakte (92) enthält, um entsprechend der Orientierung der Resultierenden des Stoßes eine Auslösung bestimmter der Sicherheitselemente zu gewährleisten.

10. Abschaltsicherungsvorrichtung nach irgendeinem der vorangehenden Ansprüche, dadurch gekennzeichnet, daß das obere Teil (11') und das untere Teil (11'') miteinander verschweißt sind, damit der Abschalter einmalig brauchbar ist.
